# EUROPÄISCHE PATENTANMELDUNG

(11) **EP 1 265 120 A1**
(43) Veröffentlichungstag der Anmeldung: **11.12.2002**
(21) Anmeldenummer: 02076834.7
(22) Anmeldetag: 22.04.2002
(51) Int. Cl.: G05D 16/20

(54) **Druckgeber**

(30) Priorität: 16.05.2001 EP 01810495
(71) Anmelder: ESEC Trading SA, 6330 Cham (CH)
(72) Erfinder: Mannhart, Eugen, Dr., 6330 Cham (CH)
(74) Vertreter: Falk, Urs, Dr.

(57) **Zusammenfassung**

Ein Druckgeber für die Erzeugung eines geregelten Unter- oder Überdrucks umfasst ein mit Druckluft beaufschlagbares Ventil (1), einen Motor (10) zum Verstellen der Lage des Ventilkopfes (14), einen Sensor (8) zur Messung des zu regelnden Druckes und einen elektronischen Regler (9). Das Ventil besteht aus einem mit einem Ventilsitz (13) zusammenwirkenden Ventilkopf. Die Drehbewegung der Welle (11) des Motors (10) wird mittels einer Kupplung (12) in eine Längsbewegung des Ventilkopfes umgesetzt. Zwischen der Welle (11) des Motors (10) und dem Ventilkopf ist eine Feder (20) eingesetzt, die den Motor (10) mechanisch so belastet, dass der Motor (10) die vom Regler (9) vorgegebene Soll-Drehzahl nicht erreicht, sondern langsamer dreht. Die Belastung des Motors (10) ist abhängig von der Stellung des Ventilkopfes. Dies ist für den Regler gleichbedeutend mit einer Linearisierung der Kennlinie der Regelstrecke.

## Beschreibung

Die Erfindung betrifft einen Druckgeber der im Oberbegriff des Anspruchs 1 genannten Art.

Bei der Montage von Halbleiterchips werden die Halbleiterchips mit einem Epoxy-Klebstoff auf das Substrat geklebt. Dabei ist es erforderlich, eine genau bestimmte Menge an Klebstoff auf das Substrat aufzutragen. Das Auftragen des Klebstoffs erfolgt beispielsweise mit einer Dispensdüse, wie sie in der europäischen Patentanmeldung EP 928637 beschrieben ist. Der Klebstoff in der Dispensdüse wird taktweise mit Druckpulsen ausgestossen. Der Druckpuls besteht aus einer Überdruck- und einer Unterdruck- bzw. Vakuumphase. Die Vakuumphase dauert jeweils bis zur nächsten Überdruckphase an. Sie ist nötig, um das Ausfliessen von Klebstoff zu verhindern. Die Stärke des Vakuums in dieser Endphase hängt von den Eigenschaften des Klebstoffs ab und wird für jeden Klebstofftyp vorgegeben. Die Erzeugung des Vakuums erfolgt beispielsweise mit einer aus einem Nadelventil und einer nachgeschalteten Venturidüse bestehenden Einrichtung. Das derart erzeugte Vakuum hängt stark nicht-linear von der Stellung des Nadelventils ab. Im dynamischen Betrieb ist daher die Regelung des Vakuums sehr schwierig.

Der Erfindung liegt die Aufgabe zugrunde, eine Lösung für die Regelung des Vakuums einer solchen Einrichtung zu finden.

Die genannte Aufgabe wird erfindungsgemäss gelöst durch die Merkmale des Anspruchs 1.

Ein Druckgeber besteht aus einem mit Druckluft beaufschlagbaren Ventil, das einen mit einem Ventilsitz zusammenwirkenden Ventilkopf aufweist, einem Motor zum Verstellen der Lage des Ventilkopfes und damit des Druckes am Ausgang des Ventils, einem Sensor zur Messung des zu regelnden Druckes und einem elektronischen Regler. Der Motor weist eine drehbare Welle auf, deren Drehrichtung und Drehzahl vom elektronischen Regler aufgrund eines Sollwertes und des vom Drucksensor gelieferten Signals geregelt werden. Die Drehbewegung der Welle wird über eine Kupplung in eine Längsbewegung des Ventilkopfs übertragen. Der erfindungsgemässe Druckgeber kennzeichnet sich dadurch aus, dass zwischen der Welle und dem Ventilkopf eine Feder eingesetzt ist. Wenn das Ventil geschlossen ist, dann ist die Feder entlastet oder etwas vorgespannt. Je mehr das Ventil geöffnet wird, desto stärker wird die Feder zusammengedrückt: Die Feder übt eine von der Lage des Ventilkopfes abhängige Kraft auf die Welle aus. Sie belastet also den Motor mechanisch. Die Eigenschaften des Motors sind so gewählt, dass die mechanische Belastung dazu führt, dass der Motor nicht mit der vom Regler vorgegebenen Drehzahl, sondern mit einer geringeren Drehzahl dreht. Für den Regler bedeutet dies eine Linearisierung der Regelkennlinie. Als Ventil wird bevorzugt ein Nadelventil verwendet und der Motor ist bevorzugt ein Gleichstrommotor.

In einem bevorzugten Ausführungsbeispiel umfasst der Druckgeber:
- ein Ventil mit einem Einlass für die Zuführung von Druckluft, wobei das Ventil einen Ventilkopf und einen Ventilsitz umfasst,
- einen Gleichstrommotor zum Verstellen der Position des Ventilkopfes in Bezug auf den Ventilsitz,
- Mittel um die Drehbewegung einer Welle des Motors in eine Längsbewegung des Ventilkopfes umzusetzen,
- einen Drucksensor,
- einen elektronischen Regler für die Regelung von Drehrichtung und Geschwindigkeit des Motors basierend auf einem vom Drucksensor gelieferten Signal und einem Sollwert für den Druck, und
- eine Feder, die zwischen der Welle des Motors und dem Ventilkopf eingefügt ist, um in Abhängigkeit von der Position des Ventilkopfs eine variierende mechanische Belastung des Motors zu erzeugen, wobei eine zunehmende mechanische Belastung des Motors eine zunehmende Reduktion der Geschwindigkeit des Motors im Vergleich zum unbelasteten Zustand bewirkt.

Der Druckgeber kann auch zur Erzeugung von Vakuum verwendet werden, indem ihm eine Einrichtung zur Erzeugung von Vakuum, beispielsweise eine Venturidüse, nachgeschaltet wird. In diesem Fall wird der Sensor bevorzugt für die Messung des Vakuums eingesetzt, so dass die Regelstrecke nicht nur das Ventil, sondern auch die Venturidüse umfasst.

Der Begriff Druckgeber meint sowohl Einrichtungen zur Erzeugung eines geregelten Überdrucks als auch Einrichtungen zur Erzeugung eines geregelten Unterdrucks bzw. Vakuums.

Nachfolgend wird ein Ausführungsbeispiel der Erfindung anhand der Zeichnung näher erläutert.

Es zeigen:
- Fig. 1: einen Druckgeber, und
- Fig. 2: zwei Kennlinien.

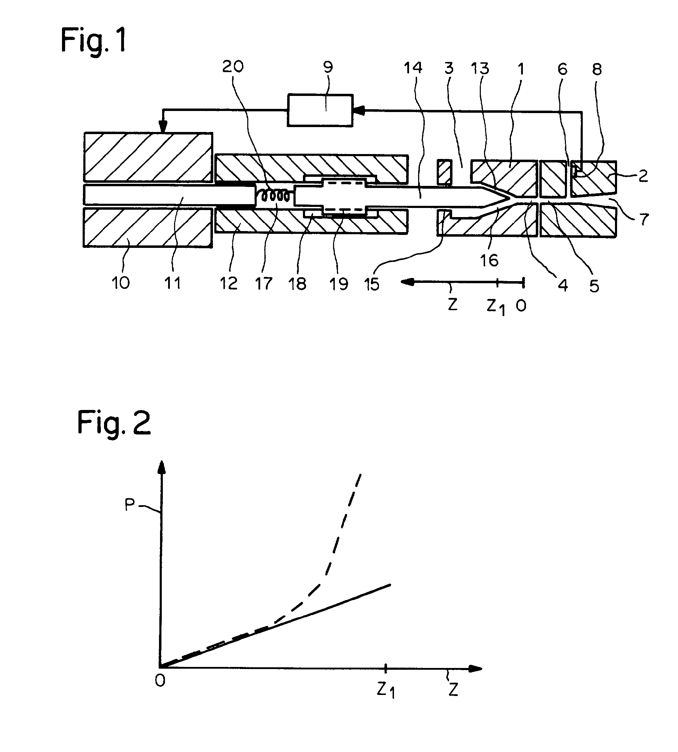

Die Fig. 1 zeigt einen Druckgeber in der Form einer mit Druckluft betreibbaren Einrichtung zur Erzeugung eines geregelten Unterdrucks bzw. Vakuums, die auch als Vakuumquelle bezeichnet werden kann. Der Druckgeber umfasst ein Ventil, bevorzugt ein Nadelventil 1, und eine Venturidüse 2. Das Nadelventil 1 hat einen mit Druckluft beaufschlagbaren Eingang 3 und einen Ausgang 4, der einen ersten Eingang 5 der Venturidüse 2 speist. Die Venturidüse 2 weist einen zweiten Eingang 6, an dem das erzeugte Vakuum anliegt, und einen Ausgang 7 auf, über den die vom Nadelventil 1 zugeführte Luft an die Umgebung abgegeben wird. Für die Regelung des Vakuums sind ein Vakuumsensor 8, ein Antrieb zum Verstellen des Nadelventils 1 sowie ein elektronischer Regler 9 vorhanden. Der Antrieb besteht aus einem Motor 10, vorzugsweise einem Gleichstrommotor, mit einer rotierenden Welle 11 und einer auf der Welle 11 befestigten Kupplung 12. Das Nadelventil 1 hat einen Ventilsitz 13, in den ein als Nadel 14 ausgebildeter Ventilkopf eingreift. Die Nadel 14 ist über ein Schraubgewinde 15 luftdicht im Nadelventil 1 gelagert. Beim Drehen der Nadel 14 ändert sich der zwischen der Spitze der Nadel 14 und dem Ventilsitz 13 gebildete Zwischenraum 16, der den Druckabfall des Nadelventils 1 und damit den Druck am ersten Eingang 5 der Venturidüse 2 bestimmt. Die Kupplung 12 weist eine Längsbohrung 17 und zwei parallel dazu verlaufende Schlitze 18 auf. Die Längsbohrung 17 nimmt das dem Ventilsitz 13 abgewandte Ende der Nadel 14 auf, wobei zwei an der Nadel 14 befestigte Flügel 19 in die Schlitze 18 ragen. Über die in den Schlitzen 18 der Kupplung 12 geführten Flügel 19 wird die Drehbewegung der Welle 11 des Motors 10 auf die Nadel 14 übertragen und, wegen der Lagerung der Nadel 14 im Schraubgewinde 15 des Nadelventils 1, in eine Längsbewegung der Nadel 14 transformiert.

Der elektronische Regler 9 liefert an seinem Ausgang eine Gleichspannung, deren Polarität die Drehrichtung des Motors 10 angibt und deren Betrag die Drehzahl steuert. Eine relativ kleine Spannung bedeutet, dass der Motor 10 langsam dreht. Mit zunehmender Spannung erhöht sich die Drehzahl des Motors 10. Der Motor 10 hat die Eigenschaft, dass er erst dann läuft, wenn die Spannung einen Schwellwert überschreitet.

Die Kennlinie p(z), wobei die Grösse z die Position der Spitze der Nadel 14 in Richtung ihrer Längsachse z und die Grösse p den Druck am Ausgang der Venturidüse 2 bezeichnet, zeigt den in der Fig. 2 mit einer gestrichelten Kurve dargestellten Verlauf. Wenn das Nadelventil 1 geschlossen ist, ist z = 0. Die Kennlinie ist im Arbeitsbereich stark nicht-linear, was die dynamische Regelung des Vakuums schwierig macht. Erfindungsgemäss ist deshalb vorgesehen, in der Kupplung 12 zwischen der Welle 11 und der Nadel 14 eine Feder 20 einzusetzen, die eine von der Stellung z der Nadel 14 abhängige Kraft auf die Stirnseite der (axial nicht verschiebbaren) Welle 11 ausübt und daher den Motor 10 mechanisch belastet. Bei z = 0 ist die Feder 20 entweder vollständig entlastet oder bereits leicht zusammengedrückt. Bei z = z₁ ist die Feder 20 hingegen vergleichsweise stark zusammengedrückt: Die Belastung des Motors 10 nimmt innerhalb des Arbeitsbereiches der Nadel 14 von z = 0 bis z = z₁ linear zu. Der Gleichstrommotor 10 und die von der Feder 20 im Arbeitsbereich der Nadel 14 aufgebrachte Kraft sind derart aufeinander abgestimmt, dass eine von der Feder 20 bewirkte, zunehmende mechanische Belastung eine zunehemende Reduktion der Drehzahl des Motors 10 bewirkt. Der Grad der Reduktion der Drehzahl hängt von also einerseits von der Federkonstanten der Feder 20 und andererseits von den Eigenschaften des Gleichstrommotors 10 ab. Als Motor ist also ein Gleichstrommotor gewählt, dessen Drehzahl sich bei mechanischer Belastung seiner Welle gegenüber der Drehzahl im unbelasteten Zustand verringert.

Im Betrieb regelt der elektronische Regler 9 das Vakuum, indem er aufgrund des Signals des Vakuumsensors 8 die Drehrichtung und die Soll-Drehzahl des Motors 10 steuert. Da die Welle 11 des Motors 10 durch die Feder 20 in Abhängigkeit der Stellung der Nadel 14 mechanisch belastet wird, dreht die Welle des Motors 10 nicht mit der vom elektronischen Regler 9 vorgegebenen Soll-Drehzahl, sondern mit einer gegenüber der Soll-Drehzahl kleineren Drehzahl. Dies führt zu folgendem Regelverhalten: Im unteren Bereich der Kennlinie, wo z klein ist (in der Fig. 2 im linken Bereich), ist die Belastung des Motors 10 relativ gering und der Motor 10 dreht annähernd mit seiner vorgegebenen Soll-Drehzahl. Im oberen Bereich der Kennlinie, wo z vergleichsweise gross ist (in der Fig. 2 im rechten Bereich), ist die Belastung des Motors 10 relativ gross und der Motor 10 dreht wesentlich langsamer als mit seiner Soll-Drehzahl.

Dies ist für den elektronischen Regler 9 gleichbedeutend mit einer Linearisierung der Kennlinie p(z) und es sieht für den elektronischen Regler 9 so aus, als hätte die Kennlinie den in der Fig. 2 mit einer ausgezogenen Linie dargestellten Verlauf. Bei einer solchen, zumindest teilweise linearisierten Kennlinie lässt sich das Vakuum am zweiten Eingang 6 der Venturidüse 2 mit einem als herkömmlichen PI-Regler ausgebildeten Regler 9 regeln.

Beim Auftragen von Klebstoff auf einem Die Bonder liegt der Arbeitsbereich der Vakuumquelle typisch im Bereich von 0 bis 70 mbar.

Die gleiche Anordnung kann, ohne Venturidüse, auch zur Erzeugung eines geregelten Überdruckes am Ausgang 4 des Nadelventils 1 verwendet werden. Dazu wird anstelle des Vakuumsensors 8 ein Drucksensor benötigt, der den Druck am Ausgang 4 des Nadelventils 1 misst und an den Regler 9 leitet.

## Patentansprüche

1. Druckgeber, mit einem mit Druckluft beaufschlagbaren Ventil, das einen mit einem Ventilsitz (13) zusammenwirkenden Ventilkopf aufweist, einem Motor (10) zum Verstellen der Lage des Ventilkopfes, wobei die Drehbewegung einer Welle (11) des Motors (10) in eine Längsbewegung des Ventilkopfes umsetzbar ist, einem Sensor zur Messung des zu regelnden Druckes und einem elektronischen Regler (9), **dadurch gekennzeichnet, dass** zwischen der Welle (11) des Motors (10) und dem Ventilkopf eine Feder (20) eingesetzt ist, wobei die Feder (20) entsprechend der Lage des Ventilkopfes mehr oder weniger zusammengedrückt wird und damit eine mechanische Belastung des Motors (10) bewirkt, und dass eine zunehmende mechanische Belastung des Motors (10) durch die Feder (20) eine zunehmende Reduktion der Drehzahl des Motors (10) gegenüber seiner Drehzahl im unbelasteten Zustand bewirkt.

2. Druckgeber nach Anspruch 1, **dadurch gekennzeichnet, dass** das Ventil ein Nadelventil (1) ist.

3. Druckgeber nach Anspruch 1 oder 2, **dadurch gekennzeichnet, dass** dem Ventil eine Einrichtung zur Erzeugung eines Unterdrucks nachgeschaltet ist und dass der Sensor den Unterdruck misst.

4. Druckgeber nach Anspruch 3, **dadurch gekennzeichnet, dass** die Einrichtung zur Erzeugung von Unterdruck eine Venturidüse (2) ist.
